# EUROPEAN PATENT APPLICATION

(11) **EP 4 254 104 A1**
(43) Date of publication of application: **04.10.2023**
(21) Application number: 23165000.3
(22) Date of filing: 29.03.2023
(51) Int. Cl.: G05B 19/418

(54) **DEVICE AND PROGRAM FOR COLLECTING DATA**

(30) Priority: 01.04.2022 JP 2022061819
(71) Applicant: OMRON Corporation, Kyoto 600-8530 (JP)
(72) Inventor: SAKASHITA, Shota, 600-8530 Kyoto-shi (JP)
(74) Representative: Mewburn Ellis LLP

(57) **Abstract**

A data collection device includes a data collection unit that collects data of a data item related to production work from a production line (3) that produces a target through a plurality of processes (3A, 3B, 3C), and an acquisition unit (88, 89) that acquires an identifier of the target produced in the production line. The data collection device links, for each process, the identifier of the target and an inspection result of the target with collection data collected in a period in which the production work is performed on the target in the process, and generates, for each process, visualization data visualizing the linked collection data of the process.

## Description

### CROSS REFERENCE TO RELATED APPLICATIONS

This nonprovisional application is based on Japanese Patent Application No. 2022-061819 filed on April 1, 2022, with the Japan Patent Office, the entire contents of which are hereby incorporated by reference.

### BACKGROUND OF THE INVENTION

### Field of the Invention

The present disclosure relates to a technique for collecting data, particularly to a technique for collecting data from a production line of factory automation (FA). Description of the Background Art

A technique for monitoring the production line including the plurality of processes has been proposed. For example, Japanese Patent Laying-Open No. 2021-86193 discloses an information collection system of an industrial instrument. The information collection system includes: a collection unit that collects a plurality of pieces of processing information related to each of a plurality of processing processes executed by a plurality of processing instruments from each of the plurality of processing instruments before corresponding one product is manufactured from at least one workpiece; and an association unit that associates the plurality of pieces of processing information collected by the collection unit with each other by adding a cooperation identifier that can cooperate among a plurality of processing processes related to one product.

### SUMMARY OF THE INVENTION

A target such as a product produced on a production line is shipped after inspection. At a production site, there has been a user need to visually recognize data related to production of the target collected from the production line and inspection data of the target while both the data are linked with each other. Japanese Patent Laying-Open No. 2021-86193 does not disclose a technique for visualizing the collected information.

It is an object of the present disclosure to provide a configuration capable of producing data visualizing by linking the data related to the production of the target collected from the production line and the inspection data with each other.

A data collection device according to one example of the present disclosure that collects data of a target produced through one or a plurality of processes provided in a production line, the data collection device includes: a collection unit configured to collect data of a data item related to production work from each process; an acquisition unit configured to acquire an identifier of the target produced in the production line; a linking unit configured to link, for the each process, the identifier of the target and an inspection result of the target with collection data collected from the process by the collection unit in a period in which the production work is performed on the target in the process; and a generation unit configured to generate, for each of the steps, visualization data visualizing the collected data of the step associated with the identifier and the inspection result by the linking.

According to this disclosure, a configuration capable of producing data visualizing by linking the data related to the production of the target collected from the production line and the inspection data with each other can be provided.

In the above disclosure, the collection unit periodically collects the data from each process, and the linking unit links, for each process, the identifier of the target and the inspection result with partial time series data corresponding to the period described above in time series data configured to be periodically collected from the process.

According to this disclosure, the partial time series data corresponding to a period in which the production work is performed on the target in the time series data configured by being periodically collected from the process can be acquired as the data to which the inspection result of the object is linked.

In the above disclosure, the visualization data includes the data that visualizes the partial time series data linked with the identifier and the inspection result for each production process by arranging the partial time series data according to the priority order based on the value of the partial time series data.

According to this disclosure, the data that visualizes the partial time series data linked with the inspection result by arranging the partial time series data in priority order based on a value of the partial time series data can be acquired.

In the above disclosure, the each process is configured to allow the target to be input one by one to the process, the production line is configured to allow the target to be input from one process to a next process in predetermined order, and
the data collection device is configured to, for the each process, for each of a plurality of groups including the target input to the process, acquire a representative value of values of the partial time series data of each target constituting the group, and acquire a deviation degree between the representative value of each group and the representative value of another group.

According to this disclosure, the deviation degree can be acquired from the representative value of the values of the partial time series data of the target constituting each group.

In the above disclosure, the generation unit determines the priority order based on the deviation degree acquired for each process.

According to this disclosure, the partial time series data linked with the inspection result can be arranged and visualized in the priority order based on the deviation degree.

In the above disclosure, the representative value includes, for each group, a statistic of values of the partial time series data of each target constituting the group.

According to this disclosure, the deviation degree can be acquired from the statistic of values of the partial time series data of the target constituting each group.

In the above disclosure, the visualization data includes data visualizing and representing the statistic corresponding to each group.

According to this disclosure, the statistic corresponding to each group can be visualized.

In the above disclosure, the generation unit determines order in the priority order of the each process so as to be higher as the deviation degree of the process is larger.

According to this disclosure, the priority order of the arrangement can be made higher as the deviation degree is larger.

In the above disclosure, the type of the inspection result includes normal, abnormal, and uninspected indicating that the target is not inspected yet.

According to this disclosure, the deviation degree between the different groups can include the deviation degree between the abnormal group and the normal group of the inspection result.

According to this disclosure, the visualization data includes, for the each process, characteristic visualization data visualizing a characteristic of a change in the value of the partial time series data for each target input to the process.

According to this disclosure, the change characteristic of the value of the partial time series data can be visualized.

In the above disclosure, the characteristic visualization data includes, for the each process, temporal characteristic visualization data representing a characteristic indicating a temporal change in a value of the partial time series data for each target input to the process by visualizing the characteristic with a common time axis.

According to this disclosure, the visualization data representing the characteristics of the temporal change in the partial time series data between different processes on the common time axis can be generated.

In the above disclosure, the visualization data includes data visualizing the collection data in a mode according to the type of the inspection result linked with the collection data.

According to this disclosure, the mode of the visualization of the data collected from each process can be changed based on the inspection result of the target corresponding to the data.

In the above disclosure, the data collection device is included in a control device that controls the production line. Thus, the control device equipped with the data collection device can be provided.

A program including instructions, when executed by one or more processors, causes the one or more processors to perform a data collection method, the method being a method for collecting data of a target produced through one or a plurality of processes provided in a production line, the machine-readable recording medium includes: collecting data of a data item related to production work from each process; acquiring an identifier of the target produced in the production line; linking the identifier of the target and an inspection result of the target with collection data collected from the process in a period in which the production work is performed on the target in the each process; and generating, for that each process, visualization data visualizing the collection data of the process linked with the identifier and the inspection result.

According to this disclosure, the configuration capable of producing data visualizing by linking the data related to the production of the target collected from the production line and the inspection data with each other when the program is executed can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view schematically illustrating an outline of a PLC 100 according to an embodiment.
Fig. 2 is a schematic diagram illustrating an example of an overall configuration of a network system of the embodiment.
Fig. 3 is a block diagram illustrating a hardware configuration example of the PLC 100 of the embodiment.
Fig. 4 is a view schematically illustrating a hardware configuration of a support device 500 of the embodiment.
Fig. 5 is a view schematically illustrating a module configuration of the PLC 100 of the embodiment.
Fig. 6 is a flowchart illustrating processing of an inspection method the embodiment.
Fig. 7 is a view illustrating a display example of a screen of the embodiment.
Fig. 8 is a view illustrating a table configuration of management of partial time series data of the embodiment.
Fig. 9 is a view illustrating a table configuration of management of partial time series data of the embodiment.
Fig. 10 is a view illustrating an example of a timing chart of the embodiment.
Fig. 11 is a view schematically illustrating a process constituting a production line.
Fig. 12 is a view illustrating another example of the timing chart of the embodiment.
Fig. 13 is a view schematically illustrating the process constituting the production line of the embodiment.
Fig. 14 is a view illustrating an example of an information setting screen of the embodiment.
Fig. 15 is a flowchart illustrating a utilization mode of information based on visualization data of the embodiment.
Fig. 16 is a view illustrating a display example of a screen based on visualization data of the embodiment.
Fig. 17 is a view illustrating a display example of the screen based on the visualization data of the embodiment.
Fig. 18 is a view illustrating a display example of the screen of the embodiment.
Fig. 19 is a view illustrating a display example of the screen of the embodiment.

### DESCRIPTION OF THE PREFERRED EMBODIMENT

With reference to the drawings, an embodiment of the present invention will be described in detail. The same or equivalent part in the drawings is denoted by the same reference numeral, and the description will not be repeated.

### <A. Application example>

In the embodiment, a programmable logic controller (PLC) will be described as a typical example of a "control system", but the technical idea disclosed in the present specification can be applied to any control system without being limited to the name of the PLC. In the embodiment, a "target" that becomes a production target is referred to as a product, but the term "product" is used to mean not only a finished product but also a part or an intermediate product constituting the finished product.

In the embodiment, a production line can include a plurality of processes. For example, in the production line including a plurality of processes, the product input to the production line is automatically conveyed between instruments constituting the plurality of processes by an appropriate conveyance device such as a belt conveyor. The product flows through the plurality of processes according to the process sequence by the conveyance device, namely, production operation is performed on the product in each process. The product flowing through each process is input from one process to the next process. In the embodiment, a final process of the production line includes an inspection process of inspecting whether quality of the product satisfies a standard.

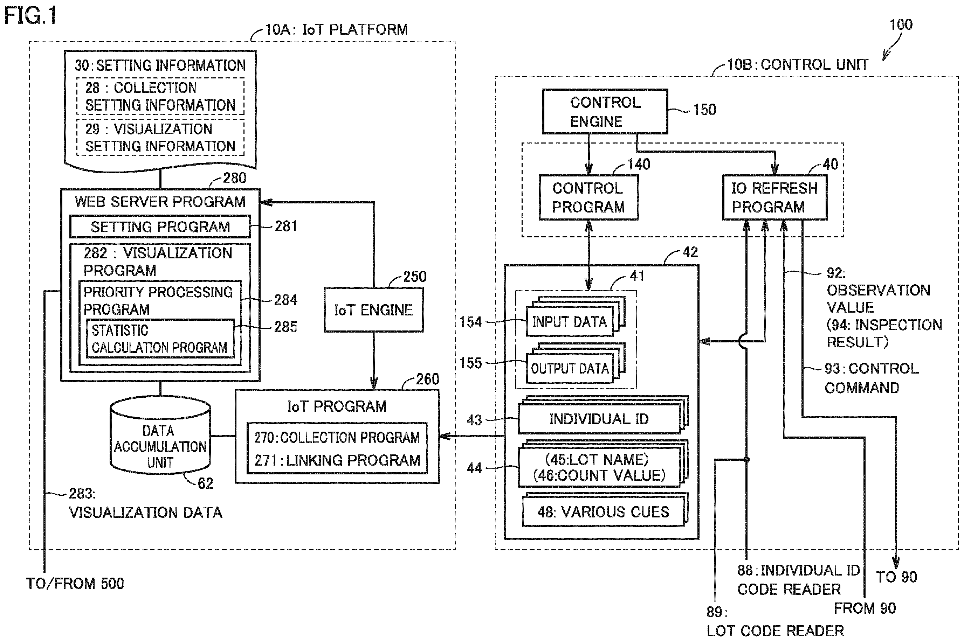

Fig. 1 is a view schematically illustrating an outline of a PLC 100 according to an embodiment. In the embodiment, PLC 100 is applied to a product production line including a plurality of processes. The plurality of processes of the production line includes a production process in which a field device 90 that performs the production operation on the product is provided and an inspection process in which field device 90 that inspects the product subjected to the production process is provided. An individual ID code reader 88 and a lot code reader 89 that detect an ID (identifier) of the product are further provided in the production line. Field device 90 of the production line includes an actuator that exerts some physical action on a field such as the production line according to a control command 93, and an input and output device such as a sensor that exchanges information with the field. The state of field device 90 is observed by such the input and output device, and an observation value 92 is output.

In the embodiment, field device 90 included in the inspection process includes an inspection device. When PLC 100 detects that the product is input to the inspection process based on observation value 92 from the field, the inspection device operates according to control command 93 from a control program 140 to inspect the product, and outputs an inspection result 94 as observation value 92. Inspection result 94 includes a product ID of the inspection target product.

PLC 100 includes a control unit 10B that repeatedly executes processing for exchanging data with instruments provided in the production line (hereinafter, also referred to as IO refresh) and processing for control arithmetic operation for each predetermined control cycle. Control unit 10B can constitute a control device that controls a production line.

Referring to Fig. 1, PLC 100 includes control unit 10B and an IoT platform 10A. Control unit 10B configures a platform that executes a program related to real-time control of an industrial instrument under a real-time operating system (OS), and IoT platform 10A mainly configures a platform executing a program of IoT processing under a general-purpose OS.

Control unit 10B includes a control engine 150, a user program executed by control engine 150, and a data area 42. The user program includes a control program 140 for the control arithmetic operation including, for example, a ladder program and the like, and an IO refresh program 40 for IO refresh, which are executed at every predetermined control cycle. Data area 42 includes an area 41 in which input data 154 and output data 155 are stored, an area in which an individual ID 43 representing the ID of the product flowing through the process and lot data 44 are stored, and an area of various queue 48.

Control program 140 is a so-called variable program. More specifically, the data of observation value 92 referred to by control program 140 at the time of execution, the internal calculation data, and the like can be utilized using an input variable corresponding to input data 154, an output variable corresponding to output data 155, a temporary variable, and the like for each data.

Observation value 92 including inspection result 94 from field device 90 is stored in data area 42 as input data 154 by the IO refresh, control program 140 executes the control arithmetic operation based on input data 154, calculated control command 93 is stored in data area 42 as output data 155, and control command 93 of output data 155 is read from data area 42 and output to field device 90.

As described above, PLC 100 repeatedly performs the IO refresh and the control arithmetic processing in the control cycle, thereby controlling field device 90 in synchronization with each other. As a configuration for implementing such the synchronization control, for example, PLC 100 may adopt a configuration in which a user program including control program 140 and IO refresh program 40 is included for each process, and the user program of each process is executed in parallel at a common control cycle.

Code reader 88 is provided in each process, for example, optically reads the identifier of the product flowing through the process, and outputs individual ID 43 indicating the read identifier. In the production line, the identifier of the product is not limited to individual ID 43, but may be acquired by lot data 44. More specifically, lot code reader 89 is provided at a head process of the production line. When a sensor (for example, a proximity sensor) detects that the product is input to the production line, lot code reader 89 optically reads a lot name 45 from the product. In addition, for each process, control unit 10B sets an operating flag described later from "OFF" to" ON", performs counting up for each setting of the operating flag, and outputs a count value 46. In this manner, count value 46 of each process indicates the order of flowing through the process for each product input to the process. In the embodiment, since the order of the product flowing through each process is configured to be matched between processes, the product input into a certain process in a k-th (k = 1, 2, 3, ...) order is matched with the product input into the next process in the k-th order. Therefore, lot data 44 common between processes can be assigned as the identifier to the same product in the same lot.

As described above, in the embodiment, the configuration in which individual ID code reader 88 is used or the configuration in which lot code reader 89 is used can be applied to the mechanism for acquiring the identifier of the product. Hereinafter, in the description common to the product identifiers indicated by individual ID 43 and lot data 44, collectively referred to as a "product ID".

IoT platform 10A may constitute a "data collection device" that mainly collects information from the production line. IoT platform 10A includes an IoT engine 250, an IoT program 260, and a web server program 280 which are executed by IoT engine 250, and also includes setting information 30 and a data accumulation unit 62. Using these elements, IoT platform 10A provides an environment for generating visualization data 283 that visualizes and represents data of at least one data item associated with the product ID from the data stored in data area 42 of control unit 10B.

For each process, setting information 30 includes collection setting information 28 indicating the setting of the data item to be collected in order to generate visualization data 283, and visualization setting information 29 indicating the setting in order to generate visualization data 283 from the data collected according to collection setting information 28. In the embodiment, the data item set in collection setting information 28 is set by, for example, a variable name of data, but the method for setting the data item is not limited to the method in which the variable name is used.

IoT program 260 includes a collection program 270 that collects (searches) the data of the data item set for each process from data area 42 according to collection setting information 28 and stores the data in data accumulation unit 62, and a linking program 271.

Data area 42 has a buffer area in which the data can be stored (held) for a time of a predetermined length. When collection program 270 and linking program 271 are executed, PLC 100 collects (searches) the product ID corresponding to the data of the set data item for each process from the buffer area of data area 42, and links the product ID with the collected data. Thereafter, the data linked with the product ID is stored in data accumulation unit 62. Thus, in data accumulation unit 62, for each process, the data of the data item related to the production work set for the process is read from the buffer area and stored in data accumulation unit 62 in time series. Hereinafter, such the data stored in time series is also referred to as time series data.

More specifically, PLC 100 searches (collects) the updated product ID from data area 42 every time the product ID (individual ID 43 or lot data 44) corresponding to each process in data area 42 is updated, specifies a portion of the time series data corresponding to the time of the read (that is, update) timing of the product ID in the collected time series data of the process, and links (associates) the read product ID with the specified portion of the time series data. After such the linking process is performed, the data linked with the product ID is stored in data accumulation unit 62. The part of the time series data specified in this manner is hereinafter also referred to as "partial time series data". In the linking processing, PLC 100 links inspection result 94 corresponding to the product with the product ID linked with the partial time series data. As described above, PLC 100 performs, for each production process, the processing for linking the product ID and inspection result 94 with the partial time series data collected in a period in which the production work is performed on the product in the process.

Web server program 280 includes a setting program 281 that generates setting information 30 and a visualization program 282 that generates visualization data 283 according to visualization setting information 29. Visualization setting information 29 includes, for each process, the data item and the product ID of the data to be visualized. When visualization program 282 is executed, PLC 100 performs visualization processing. In visualization processing, PLC 100 searches the time series data corresponding to the data item of each process from data accumulation unit 62 based on the data item set for each process indicated by visualization setting information 29. Then, PLC 100 extracts, for each product ID, the partial time series data linked with the product ID from the searched time series data of each process, and generates visible visualization data 283 in which the plurality of extracted partial time series data are visible while the pieces of partial time series data of different processes linked with the same product ID are associated with each other. Visualization program 282 includes a priority processing program 284 including a statistic calculation program 285 described later regarding the generation of visualization data 283.

When web server program 280 is executed, PLC 100 operates as a web server under IoT platform 10A. The web server transfers visualization data 283 including the web data to a support device 500. The web browser included in support device 500 displays a web screen based on the web data of visualization data 283 received from the web server. The web data includes graphical user interface (GUI) data, and the web screen includes a GUI screen. The web data can be generated using a hypertext markup language (HTML), for example, in order to visualize and represent various objects including the web screen and the image in the screen.

In this way, when the screen is displayed based on generated visualization data 283, the data regarding the production work of the product collected from the production line is visualized by the object in which the product ID and inspection result 94 are linked with each other.

In Fig. 1, the data collecting device configured under IoT platform 10A is included in PLC 100 of the control device that controls the production line, but the implementation mode is not limited thereto. For example, the data collection device may be configured by an individual device capable of exchanging the data with control 10B through a wired or wireless network.

Hereinafter, a more detailed configuration and processing of PLC 100 of the embodiment will be described as a more specific application example of the present disclosure.

### <B. System configuration>

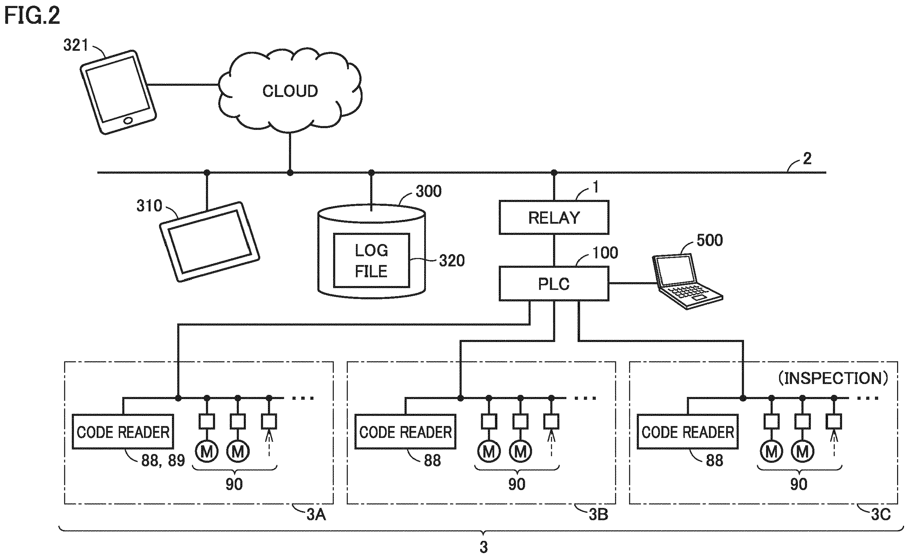

An example of a network system including a production line 3 included in FA of the embodiment will be described. Fig. 2 is a schematic diagram illustrating an example of an overall configuration of a network system of the embodiment.

In Fig. 2, production line 3 applied to the FA includes a process 3A and a process 3B of the production work and an inspection process 3C. For example, but not by way of limitation, process 3A illustrates the process of screwing the product, process 3B illustrates the process of soldering the screwed product, and process 3C illustrates the inspection process of the product after soldering. Such the process corresponds to a classification (type) of work when a plurality of types of work are performed on the product by the field device.

The inspection device as field device 90 provided in process 3C inspects the product using the captured image acquired by capturing the product in an imaging visual field. More specifically, when detecting that the product enters the imaging field based on observation value 92, PLC 100 outputs imaging control command 93, and the inspection device performs the imaging according to imaging control command 93. The inspection device collates the captured image with the model image stored in the storage by pattern matching, compares a similarity degree indicated by the collation result with a threshold, and outputs observation value 92, which is inspection result 94 based on the comparison result, to PLC 100. For example, the inspection device sets "OK" (normal quality) to inspection result 94 when the similarity is greater than or equal to the threshold, and sets "NG" (abnormal quality) to inspection result 94 and outputs the result when the similarity is less than the threshold. The inspection device is configured to include the product ID in inspection result 94, and PLC 100 can acquire the product ID and inspection result 94 for each product flowing through production line 3.

The type and number of processes of the production work included in production line 3 or the method for inspecting the product in the inspection process is not limited thereto, but may change according to the type of product produced or the specification of the product.

In each of processes 3A, 3B, and 3C, one or the plurality of field devices 90 that perform the work of the process, individual ID code reader 88, and lot code reader 89 are provided, and these instruments are connected to a field network 11. In addition to being connected to PLC 100 through field network 11, these instruments may directly connected to PLC 100 through an input and output unit (not illustrated) related to PLC 100.

For example, the data exchanged between PLC 100 and the instrument through field network 11 is updated in a very short period of several 100 µsec order to several 10 msec order. The exchanged data update processing is implemented by the IO refresh.

PLC 100 is connected to a network 2 through a relay 1. A server device 300 and a human machine interface (HMI) device 310 are connected to network 2, and an information terminal 321 is connected to network 2 through a cloud. Server device 300 receives the data transferred from PLC 100, for example, the data stored in data accumulation unit 62, and stores the data as a log file 320. The storage destination of log file 320 is not limited to the device on network 2 (for example, server device 300), but may include the device on the cloud.

A protocol and a framework according to a difference in required characteristics are adopted for network 2 and field network 11. EtherNet/IP (registered trademark), which is an industrial open network in which a control protocol is mounted on general-purpose Ethernet (registered trademark), may be used as the protocols of network 2. EtherCAT (registered trademark), which is an example of a machine control network, may be adopted as the protocol of field network 11. The protocols of these networks may be the same or different.

Support device 500 can be connected to PLC 100. Support device 500 provides support tool that supports the user to operate production line 3. The support tool includes a preparation setting tool such as an execution environment of control program 140 or a communication environment with PLC 100. The support tool further includes a support tool that supports the setting of setting information 30. For example, such the support tool is provided to the user by a user interface (UI).

In production line 3, support device 500 may be connected to network 2, built in PLC 100, or provided as a portable terminal. In addition, an HMI device 310 or an information terminal 321 can be provided as a desktop terminal or a portable terminal.

### (C. Configuration of PLC 100)

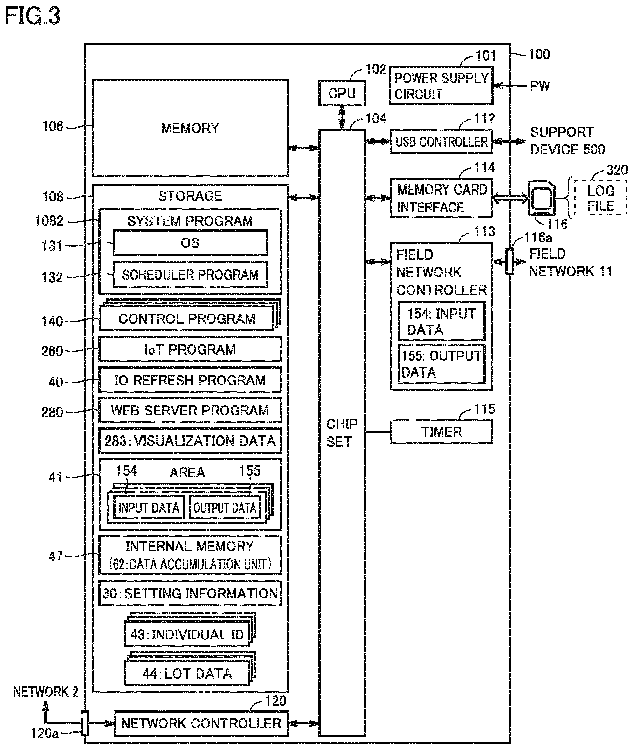

Fig. 3 is a block diagram illustrating a hardware configuration example of the PLC 100 of the embodiment. With reference to Fig. 3, PLC 100 includes a power supply circuit 101 that supplies power PW to each portion of PLC 100, a central processing unit (CPU) 102, a chip set 104, a memory 106 mainly including a volatile storage medium, a storage 108 mainly including a nonvolatile storage medium, a universal serial bus (USB) controller 112, a field network controller 113, a memory card interface 114, a timer 115, and a network controller 120 as main components.

CPU 102 reads the user program including control program 140 stored in storage 108 or an SD card 116 and deploys the user program in memory 106. CPU 102 interprets and executes the deployed program to control each portion of PLC 100 and implements the control arithmetic processing for controlling the control target such as field device 90. Furthermore, CPU 102 reads IoT program 260, web server program 280, and control program 140 that are stored in storage 108 or SD card 116, and deploys IoT program 260, web server program 280, and control program 140 in memory 106. CPU 102 interprets and executes the deployed program to control each portion, and implements the data collection and the linking processing from each process, acquisition processing of setting information 30, and the visualization processing.

Memory 106 is configured of a dynamic random access memory (DRAM), a static random access memory (SRAM), or the like. For example, storage 108 includes a non-volatile storage device such as a hard disc drive (HDD), a solid state drive (SSD), or a flash memory, but a part of storage 108 may include a volatile storage.

Chip set 104 mediates the exchange of the data between CPU 102 and each component, thereby implementing the processing of PLC 100 as a whole.

Storage 108 stores control program 140 designed according to the control target and IO refresh program 40 in addition to a system program 1082 including a scheduler program 132 and an operating system (OS) 131 that implement a basic functions of PLC 100. Storage 108 further stores IoT program 260 and web server program 280. Furthermore, storage 108 includes an area in which visualization data 283 is stored, area 41 in which the data collected regarding control is stored, an internal memory 47 constituting an area of data accumulation unit 62 corresponding to the storage, and the area in which setting information 30, individual ID 43, and lot data 44 are stored.

In the embodiment, for example, a storage format of the time series data of each process in data accumulation unit 62 can include a text data file such as a comma separated values (CSV) file. Such the file can be uniquely identified by attaching a file name and a generation date and time as a header.

USB controller 112 is in charge of the data exchange with any information processing device through the USB connection. For example, the arbitrary information processing device includes support device 500.

Field network controller 113 includes a connector 116a that connects field network 11 to which field device 90 and the like belong, and controls data exchange between the PLC 100 and other devices including field device 90 via field network 11. Field network controller 113 includes an internal buffer that stores observation value 92 received from field network 11 and control command 93 output from PLC 100 to field network 11 as input data 154 and output data 155.

Memory card interface 114 is configured such that SD card 116 is detachable. Under the control of CPU 102, memory card interface 114 writes the information in SD card 116 and reads the information from SD card 116. The information read from and written tin SD card 116 includes an application program including control program 140 and IoT program 260, data such as various settings, and a log file 320.

Timer 115 includes a clock circuit or a counter circuit that measures time, but is not limited to such the circuit, and may include a software module executed by CPU 102.

Network controller 120 includes a connector 120a that connects PLC 100 to network 2, and controls the data exchange between another device and PLC 100 through network 2.

CPU 102 includes one or a plurality of processors. The one or the plurality of processors repeatedly executes control program 140 and refresh program 40 at a predetermined cycle (for example, a control cycle), thereby performing the above-described control arithmetic processing and IO refresh to periodically control the devices connected to field network 11. Furthermore, one or the plurality of processors of CPU 102 executes IoT program 260 and web server program 280.

Although the configuration example in which required functions are provided by CPU 102 executing the program has been described in Fig. 2, some or all of these provided functions may be implemented using a dedicated hardware circuit (for example, an application specific integrated circuit (ASIC) or a field-programmable gate array (FPGA)). The main part of PLC 100 may be implemented using hardware (for example, an industrial personal computer based on a general-purpose personal computer) according to a general-purpose architecture. In this case, processing may be executed in parallel by applying a multi-core technology. The plurality of OSs having different uses may be executed in parallel using a virtualization technology, and the required application may be executed on each OS.

### <D. Configuration of support device 500>

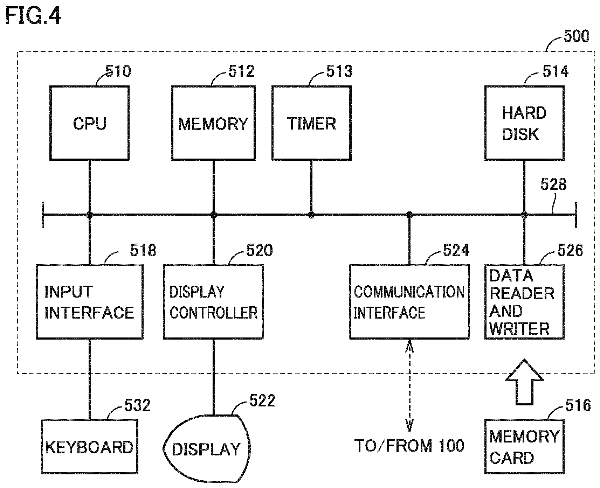

Fig. 4 is a view schematically illustrating a hardware configuration of a support device 500 of the embodiment. With reference to Fig. 4, support device 500 includes a CPU 510 including one or more processors, a memory 512 including a volatile storage device such as a dynamic random access memory (DRAM), a timer 513, a hard disk 514 configured of the nonvolatile storage device such as an HDD, an input interface 518, a display controller 520, a communication interface 524, and a data reader and writer 526. These units are data-communicably connected to each other through a bus 528.

Input interface 518 mediates the data transmission between CPU 510 and input devices such as a keyboard 523, a mouse (not illustrated), and a touch panel (not illustrated). Display controller 520 is connected to a display 522 and causes display 522 to display a processing result in CPU 510 and the like. Communication interface 524 communicates with PLC 100 through a USB. Data reader and writer 526 mediates the data transmission between CPU 510 and a memory card 516 that is an external storage medium.

Detachable attached storage medium such as SD card 116 of PLC 100 and memory card 516 in Fig. 4 includes the volatile storage medium or the nonvolatile storage medium, and for example, include a general-purpose semiconductor storage device such as a compact flash (CF) or an SD (Secure Digital), a magnetic storage medium such as a flexible disk, or an optical storage medium such as a compact disk read only memory (CD-ROM).

### <E. Module configuration of PLC 100>

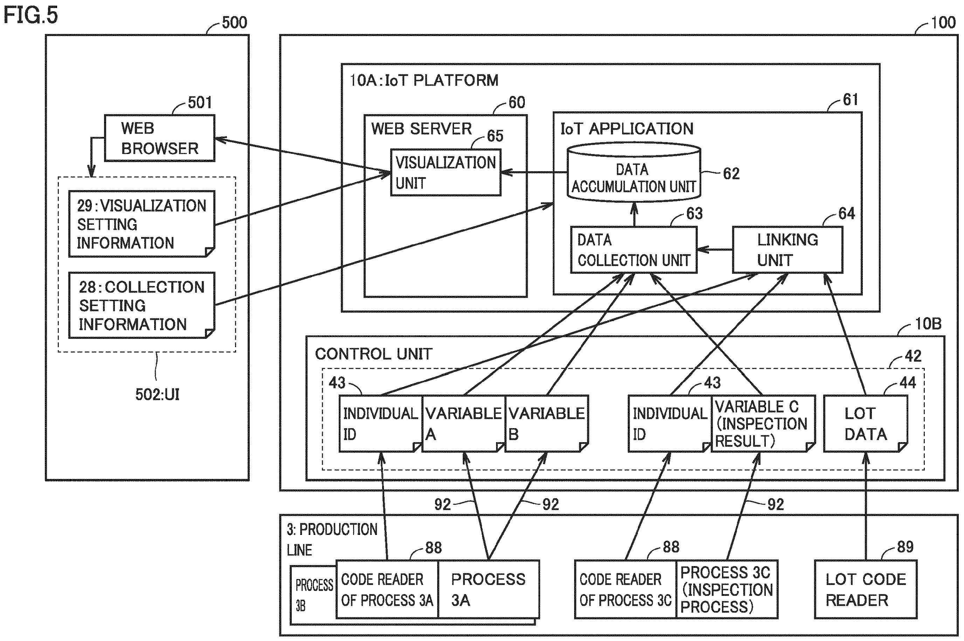

Fig. 5 is a view schematically illustrating a module configuration of the PLC 100 of the embodiment. In Fig. 5, the module configuration of PLC 100 is illustrated in association with the module of support device 500. Support device 500 includes a web browser 501 and a UI 502 activated by web browser 501. UI 502 corresponds to a tool that supports the setting of setting information 30 such as visualization setting information 29 and collection setting information 28. Web browser 501 causes display 522 to display the screen based on the web data including visualization data 283 from PLC 100.

PLC 100 includes a module configured in IoT platform 10A and a module configured in control unit 10B. PLC 100 includes a web server 60 implemented by executing web server program 280 under IoT platform 10A and IoT application 61 implemented by executing IoT program 260. IoT application 61 includes a data collection unit 63 implemented by executing collection program 270 and a linking unit 64 implemented by executing linking program 271.

Fig. 5 illustrates a mode in which visualization setting information 29 and collection setting information 28 set by the user by operating UI 502 are held in support device 500 and utilized (referred to) from the module of PLC 100 as appropriate. However, the utilization modes of visualization setting information 29 and collection setting information 28 are not limited thereto. For example, visualization setting information 29 and collection setting information 28 set through UI 502 may be transferred to PLC 100 and stored in storage 108, and the module of PLC 100 may utilize (refer to) visualization setting information 29 and collection setting information 28 stored in storage 108.

Control unit 10B collects the data of the product ID from production line 3 and the data of the variable indicating observation value 92 including inspection result 94, and stores the collected data in data area 42, by the IO refresh. The product ID data thus collected includes individual ID 43 and lot data 44. For the sake of explanation, the data item (variable A) of process 3A, the data item (variable B) of process 3B, and the data item (variable C) indicating inspection result 94 of inspection process 3C that are set by collection setting information 28 are illustrated in data area 42 of Fig. 5.

From data area 42, based on collection setting information 28, the data of the data item (variable) of each process set as the collection target is collected by data collection unit 63, and the collected time series data of the data item is subjected to the linking processing described above by linking unit 64 and then stored in data accumulation unit 62. By the linking processing, in the time series data of each process of data accumulation unit 62, the product ID and the inspection result 94 of the product are linked with the partial time series data collected in the period in which the production work is performed on the product in the process.

Visualization unit 65 generates visualization data 283 by performing the visualization processing according to the setting of visualization setting information 29 based on the time series data of each process of data accumulation unit 62. Web browser 501 acquires visualization data 283 from web server 60, and causes display 522 to display the screen based on visualization data 283.

### <F. Flowchart>

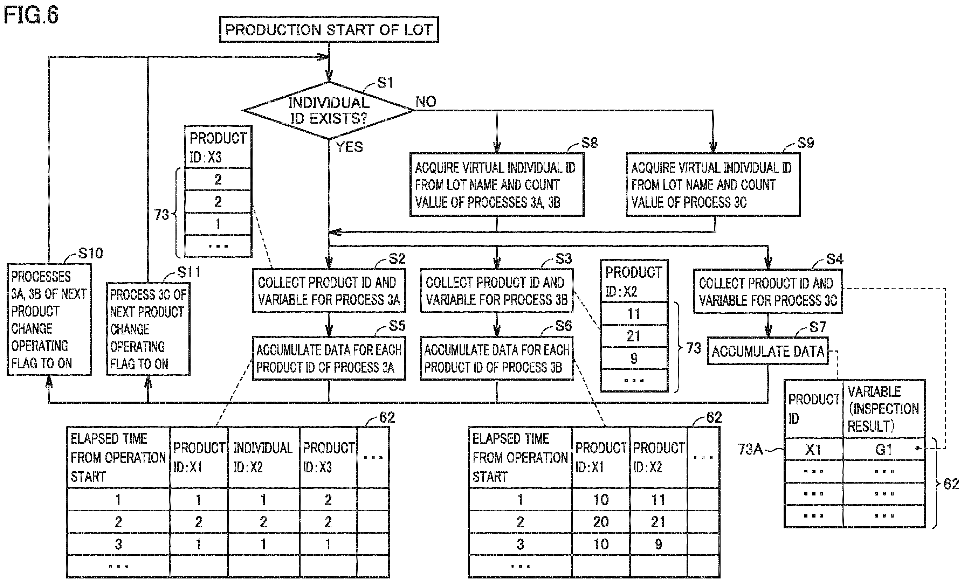

Fig. 6 is a flowchart illustrating processing of an inspection method the embodiment. The flowchart in Fig. 6 is implemented by CPU 102 executing each program in Fig. 1. In the processing of Fig. 6, for example, production line 3 includes processes 3A, 3B of the production work of the products of the lot and process 3C of inspection. When the lot includes products having product IDs "X1" to "X3", the products are introduced in the order of "X1", "X2", "X3".

CPU 102 monitors the operating flag (not illustrated) corresponding to each process indicated by input data 154 during the processing in Fig. 6. The operating flag indicates "ON" during the period in which field device 90 that performs the production work on the product in the process operates. That is, the operating flag changes to "ON" when field device 90 starts the operation, and changes to "OFF" when the operation is ended. For each process, CPU 102 starts the data collection for the process when the operating flag changes from "OFF" to "ON", and thereafter, ends the data collection when the operating flag changes from "ON" to "OFF". As described above, CPU 102 performs the data collection in the period in which the operating flag indicates "ON" for each process.

In the process of Fig. 6, the state in which the product having product ID "X1" passing through process 3B flows to inspection process 3C, the product having product ID "X2" flows from process 3A to process 3B, and the product having product ID "X3" is input to process 3A is illustrated.

Referring to Fig. 6, CPU 102 determines from which individual ID 43 or the virtual individual ID (lot data 44) the product ID is to be acquired based on the collection setting information 28 as linking unit 64 (step S1). Here, collection setting information 28 includes from which individual ID 43 or lot data 44 the setting of the product ID is to be acquired.

When it is determined that the product ID is acquired from lot data 44 (NO in step S 1), CPU 102 acquires the virtual individual ID from lot data 44 for the product flowing through each process (steps S8, S9). Thereafter, the processing transfers to step S2.

On the other hand, when it is determined that the product ID is acquired from individual ID 43 (YES in step S 1), CPU 102 collects the data based on collection setting information 28 in the period in which the operating flag is "ON", and performs the linking processing of the product ID (the individual ID or the virtual individual ID) in the collected time series data (steps S2, S3). In addition, the linking processing of the product ID (the individual ID or the virtual individual ID) and inspection result 94 of the product is performed (step S4).

Fig. 6 illustrates acquired partial time series data 73 in association with the linking processing of steps S2, S3. Partial time series data 73 associated with product ID "X3" is acquired for process 3A, and partial time series data 73 associated with product ID "X2" is acquired for process 3B. In addition, time series data 73A including inspection results 94 acquired in the inspection order is exemplified in association with the linking processing in step S4. Data 73A includes a set in which the product ID and the inspection result are linked with each other in the input order for each product input in process 3C.

CPU 102 stores (accumulates) partial time series data 73 of each process acquired in step S2 and step S3 and data 73 acquired in step S4 in data accumulation unit 62 (steps S5, S6, S7). Fig. 6 schematically illustrates the data corresponding to each product accumulated (stored) in data accumulation unit 62 in association with steps S5, S6, S7. In data accumulation unit 62, in process 3A, the linking processing is performed on each of product IDs "X1", "X2", and "X3", so that the state in which three pieces of partial time series data 73 are stored is indicated. In addition, in process 3B subsequent to process 3A, the state in which two pieces of partial time series data 73 are acquired by performing the linking processing on each of product IDs "X1" and "X2" is illustrated. In addition, in inspection process 3C, the state in which the inspection result linking process is performed for product ID "X1" is illustrated.

CPU 102 monitors the operating flag corresponding to each process, and when it is determined that the operating flag is changed to "ON" (steps S10, S11), the process proceeds to step S1, and the subsequent processing is performed in the same manner as described above. Thus, in each process, the linking processing is performed on the product input next.

Such the monitoring of the operating flag, the data collection, and the linking processing are repeatedly performed on the product input to each process. By such the repetition processing, for each production process (processes 3A, 3B), partial time series data 73 collected in the period in which the production operation is performed on the product in the process, namely, in the period in which the operating flag is ON is stored in data accumulation unit 62 while linked with the product ID of the product and inspection result 94.

In Fig. 6, it is described that the linking processing (steps S2, S5) in process 3A, the linking processing (steps S3, S6) in process 3B, and the linking processing (steps S4, S7) in process 3C are executed simultaneously, but in the actual processing, the execution time of the linking processing may be different because the required time for the production operation or the inspection may be different between the processes. Similarly, the timing of the determination of the operating flags of process 3A, 3B (step S10) and the timing of the determination of the operating flag of process 3C (step S11) are also illustrated to be the same in Fig. 6, but in actual processing, the timings may be different from each other because the length of the required time of the production work or the inspection may be different between processes.

### <G. Display example based on visualization data>

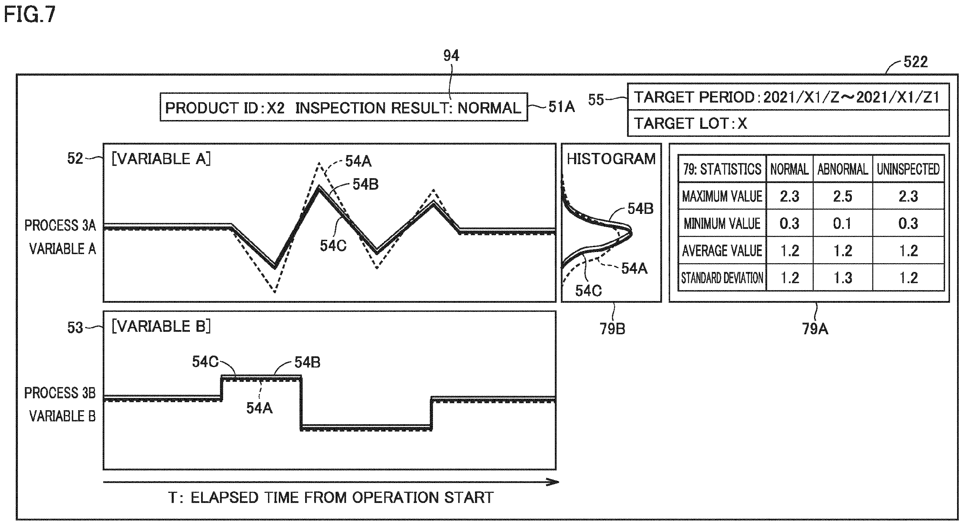

Fig. 7 is a view illustrating a display example of a screen of the embodiment. When web server program 280 is activated, PLC 100 provides service as a web server for support device 500. The provided service includes provision of visualization data 283.

In Fig. 7, for example, display 522 includes a window 51A indicating inspection result 94 of the product, windows 52, 53 visualizing and displaying the partial time series data, a window 55 indicating the period of the partial time series data to be visualized and the lot to which the product belongs, a window 79B displaying a histogram of the values of the partial time series data, and a window 79A indicating a representative value of the values of the partial time series data. In the embodiment, the term "window" is used to distinguish the display area of the information on the screen, but the technical idea of the display disclosed in the present specification is applicable to any screen without being limited to the name of the window.

In Fig. 7, the screen based on visualization data 283 is displayed based on the product ID set as a visualization target by visualization setting information 29 and process 3A and process 3B, and the data items set as the collection target by IoT program 260 based on collection setting information 28 are displayed as "variable A" and "variable B" for process 3A and process 3B.

That product ID "X2" and inspection result 94 of the product are "normal" are displayed in window 51A. In window 52, the name of the data item (variable A) of the collection target for process 3A and the characteristic indicating the temporal change in the value of the partial time series data for the data item are displayed in a graph. In window 53, the name of the data item (variable B) of the collection target for process 3B and the characteristic indicating the temporal change in the value of the partial time series data for the data item are displayed in a graph. In each of windows 52, 53, the value of data is taken on a vertical axis of the graph, and an elapsed time T is taken on a horizontal axis. Elapsed time T indicates a common time axis for the partial time series data of each product, and corresponds to the period from the start to the end of the operation of the production work for the product, for example, the period in which the operating flag is "ON".

In Fig. 7, the length of elapsed time T is the same in process 3A and process 3B, but the production work performed in each process is different, so that the length of elapsed time T actually differs between the processes. Based on such the difference, visualization data 283 includes the data that visualizes the partial time series data of each process by expanding or shortening the partial time series data in a time axis direction such that the period of each process is matched with elapsed time T having the common length.

The graph of the partial time series data corresponding to each product corresponding to the data item (variable A) is displayed in window 52 of process 3A in Fig. 7, and the graph of the partial time series data corresponding to each product corresponding to the data item (variable B) is displayed in window 52 of process 3B in Fig. 7.

Visualization data 283 is configured such that the partial time series data of the product in each process is displayed as a blue graph 54C when inspection result 94 of the product indicates normal, displayed as a red graph 54A when the inspection result indicates abnormal, and displayed as a gray graph 54B indicating an uninspected product that is not inspected in the inspection process yet. Visualization program 282 generates visualization data 283 at the timing when the screen is updated by the web browser or periodically. The screen of display 522 in Fig. 7 is updated to the screen based on visualization data 283 every time visualization data 283 is generated. Accordingly, gray graph 54B of window 52 or 53 changes to blue graph 54C or red graph 54A based on inspection result 94 when the corresponding product is inspected in the inspection process. When visualization is performed in a mode according to the type (normal, abnormal, uninspected) of the inspection result, the mode is not limited to the display color, and the mode may be set by visualization setting information 29.

In window 79A, for the values of the partial time series data of the plurality of products of the target lot passing through process 3A in the period illustrated in window 55, the value corresponding to the group of products determined to be normal, the value corresponding to the group of products determined to be abnormal, and the value corresponding to the group of uninspected products are displayed for a statistic 79 (a maximum value, a minimum value, an average value and standard deviation) that is an example of the representative value calculated by data collection unit 63. For example, the maximum value of statistic 79 of the group of a certain product indicates a representative value (the maximum value, the minimum value, the average value, and the standard deviation) for the maximum value indicated by the partial time series data of each product constituting the group. Statistic 79 is similarly derived for other types of groups.

As described above, in window 79A, for example, the statistics of the product having product ID "X2" and the partial time series data and the product having the product ID other than "X2" and the partial time series data are quantitatively indicated. For example, the generation module of visualization data 283 based on the calculation of the statistic and the statistic is configured to include visualization program 282 including statistic calculation program 285.

In window 79B, a histogram is displayed in association with the waveform graph of the partial time series data of process 3A. In this histogram, the horizontal axis indicates a plurality of ranks of values indicated by the waveform of window 52, and the vertical axis indicates a frequency of the value belonging to each rank. Similarly to the graph of the waveform of window 52, the visualization data constituting the histogram is also the data representing the characteristic of the change in the value of the partial time series data for each product input to process 3A in the visualized manner. Also in window 79B, the histograms based on the partial time series data for a product group with the normal quality, a product group with the abnormal quality, and a product group that is not inspected yet are displayed in blue, red, and gray, respectively.

In Fig. 7, visualization data 283 is configured to display, but not limited to, statistic 79 and the histogram in association with window 52 of process 3A in windows 79A, 79B. Similarly to window 52, visualization data 283 may be configured to display the window presenting the statistic and the histogram corresponding to the partial time series data graphed in window 53 in association with window 53 of process 3B.

Visualization data 283 includes the data that visualizes the partial time series data linked with the product ID and inspection result 94 for each production process by arranging the partial time series data on the same screen according to the priority order based on the value of the partial time series data. The priority order of such the arrangement can be determined based on a deviation degree acquired for each process. More specifically, CPU 102 executes priority processing program 284 to acquire, for each process, the representative value of the value of the partial time series data of each product constituting the group for each of a plurality of groups (groups classified based on inspection results 94) including the products input to the process, and acquire the deviation degree between the representative value of each group and the representative value of another group. The priority order is determined based on the deviation degree acquired in this manner.

For example, visualization data 283 is configured such that the deviation degree between the normal value and the abnormal value of statistic 79 of a certain group is compared with the deviation degree between the normal value and the abnormal value of statistic 79 of another group, and the graph of the partial time series data of the group having the larger deviation degree is displayed on the higher order side of the arrangement on the screen than the graph of the partial time series data of another group. As described above, the two groups for which the deviation degree is to be calculated only need to have different types of inspection results, and typically, the deviation degree is calculated between the abnormal group and the normal group.

In Fig. 7, because the deviation degree is larger in process 3A than in process 3B, window 52 of process 3A is displayed on the upper side of the screen and window 53 of process 3B is displayed in the next order (lower side) in the arrangement. The arrangement may be an arrangement from the right side to the left side of the screen. For example, the module that generates visualization data 283 enabling the screen display of the partial time series data according to the priority order based on the statistic is configured to include visualization program 282 including priority processing program 284.

The screen in Fig. 7 may be provided as the GUI. The screen in Fig. 7 includes the graph that visualizes the characteristic indicating the temporal change in the partial time series data of each product and the object (partial image) such as numerical value for each process. The GUI data included in visualization data 283 can include the object constituting the screen in Fig. 7 and the command executed in response to reception of a click operation or the like performed on the object. In Fig. 7, for example, when the object of waveform graph 54C of window 52 is clicked, the command is executed, so that product ID "X2" and inspection result 94 corresponding to graph 54C are displayed in window 51A. Such the command may switch a display mode (a line type, a line width, a color, and the like of the graph) of the operated graph.

Visualization setting information 29 can include the setting of the switching of the display mode of the graph described above. For example, visualization setting information 29 may include the setting in which, regarding the color density of the graph of window 52 or 53, the graph of the partial time series data acquired more recently in the target period indicated by window 55 is displayed in a darker color and the graph of the partial time series data of the past is displayed in a lighter color.

In addition, a plurality of waveforms may be simultaneously selected in windows 52, 53 by the user operation. In Fig. 7, the waveform is displayed for one lot designated by window 55, but the graph (waveform) for each lot may be displayed for a plurality of lots. In addition, the period and the lot to be displayed in window 55 may be set by visualization setting information 29.

The display destination of the screen based on visualization data 283 is not limited to support device 500, but may be HMI device 310, information terminal 321, or PLC 100 when PLC 100 includes the display device. In windows 52 and 53 of Fig. 7, the waveform of the representative value (for example, average) of the partial time series data acquired in the target period (target lot) for the corresponding process may be displayed, or the waveform of the partial time series data of all the products acquired in the target period (target lot) may be displayed.

The screen in Fig. 7 can be provided as information supporting the determination of which process the abnormality of the product is caused by. For example, the user can estimate process 3A having the large deviation degree as the process causing the quality abnormality of the product from the screen of Fig. 7, and estimate that the behavior of field device 90 in which observation value 92 of the data item "variable A" collected in process 3A is observed is abnormal based on the estimation of process 3A.

### <H. Example of data collection>

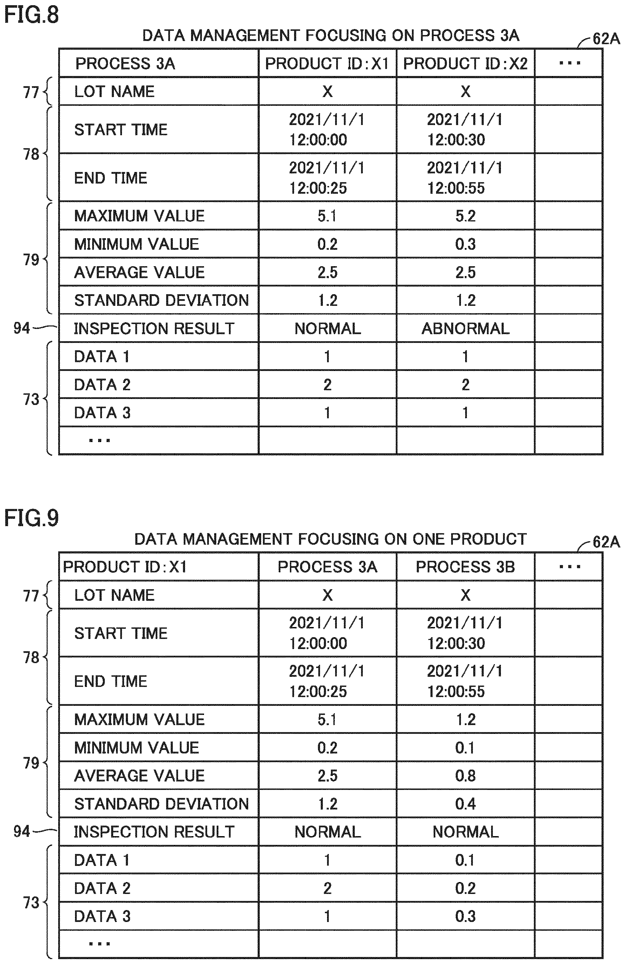

Figs. 8 and 9 are views illustrating a table configuration of the management of the partial time series data of the embodiment. In the embodiment, data collection unit 63 may manage partial time series data 73 focusing on each process in data accumulation unit 62 as illustrated in Fig. 8, or may manage partial time series data 73 focusing on each product as illustrated in Fig. 9.

In a management table 62A of Fig. 8, for example, in process 3A, data collection unit 63 manages partial time-series data 73 in one column by associating a lot name 77, a collection start and end time 78, statistic 79, and inspection result 94 for each product ID. For other processes, the partial time series data is managed similarly to process 3A. Collection start and end time 78 indicates the time from the collection start to the collection end of the data item in the process. This time corresponds to the time during which the operating flag change from "ON" to "OFF".

In the management table 62A of Fig. 9, for example, for the product with product ID "X1", data collection unit 63 manages partial time series data 73 for each process by associating lot name 77, collection start/end time 78, statistic 79, and inspection result 94 in one column.

In the configuration of Fig. 8, each process (variable) is held as one management table 62A, but in the case where the user desires to store the data for traceability application, the data of management table 62A in Fig. 9 can be held in the form of one CSV file for each product ID. In the embodiment, one of Fig. 8 or Fig. 9 may be set as the mode of the data accumulation (collection) in collection setting information 28. Data collection unit 63 collects the partial time series data in the mode of Fig. 8 or Fig. 9 according to the setting of collection setting information 28.

In the processing of Fig. 6, partial time series data 73 is acquired and stored in parallel with the flow of each product of the lot in production line 3, but the partial time series data 73 may be acquired as follows. That is, while the time series data of each process is constantly collected, only the index (the time when it is determined that the operating flag is ON, the product ID, and the like) is accumulated as the process data. After all the products of the lot flow through all the processes, the linking processing of acquiring (extracting) partial time series data 73 of each product from the time series data of each process may be performed based on the index, and acquired partial time series data 73 may be stored in data accumulation unit 62 in the mode of Fig. 8 or Fig. 9.

### <I. Timing chart>

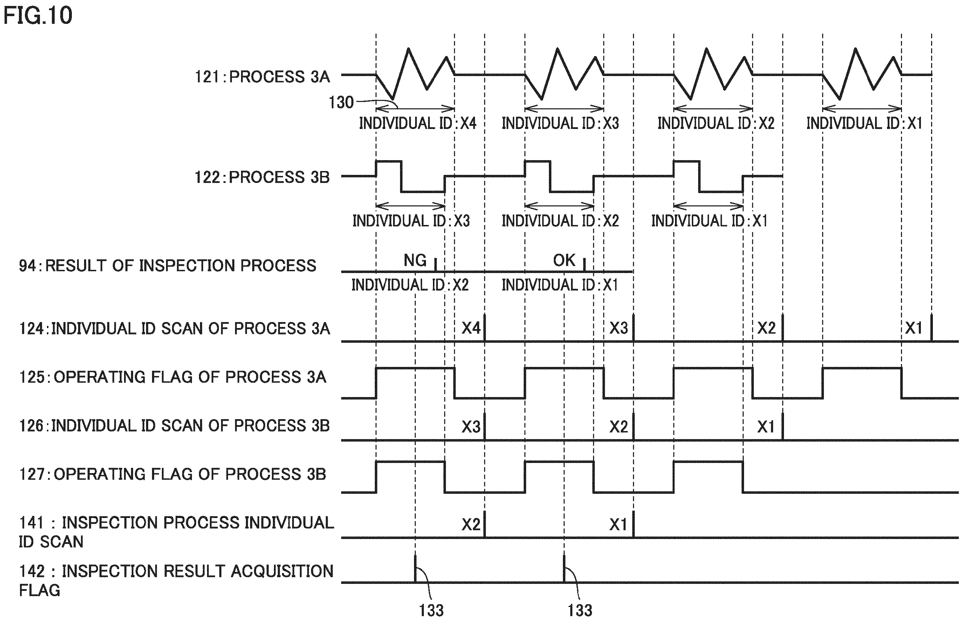

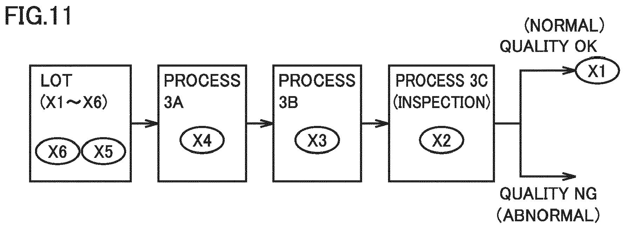

Fig. 10 is a view illustrating an example of a timing chart of the embodiment. Fig. 11 is a view schematically illustrating a process constituting a production line. In Fig. 11, for example, the production line includes process 3A in which the lot of products are input and next process 3B. When the lot includes products having product IDs "X1" to "X6", the products are introduced in the order of "X1", "X2", "X3", "X4", "X5", "X6". In Fig. 11, the product having product ID "X1" passing through process 3C that is the inspection process is determined to be "quality OK", namely, normal. In addition, the product having product ID "X2" passing through process 3B flows to next process 3C, the product having product ID "X3" passing through process 3A flows to process 3B, and the product having product ID "X4" is input to process 3A. Fig. 10 illustrates the timing chart in the state of the process in Fig. 11.

In Fig. 10, in process 3A, the data collection is performed for a variable 121 in a period 130 in which an operating flag 125 is "ON", and individual ID 43 is linked as the product ID with respect to the collected partial time series data. Similarly, in process 3B, the data collection is performed on a variable 122 during the period in which an operating flag 127 is "ON", and individual ID 43 is linked with the collected partial time series data. In addition, in processes 3A, 3B, 3C scans 124, 126, 141 of individual ID 43 are performed at the timing when the product input to the process is detected. Every time inspection result 94 is set in data area 42 from process 3C, control unit 10B sets a flag 142 from OFF to ON. Data collection unit 63 acquires inspection result 94 of process 3C from data area 42 with a set (ON 133) of flags 142 as a trigger. In Fig. 10, lot name 45 of the product input to production line 3 is detected (acquired) every lot switching. In production line 3, in order to manage the products in a unit in which the plurality of products are collected, for each unit, the products belonging to the unit are classified and managed by assigning common lot name 45 (for example, the lot number).

### (I1. Another example of timing chart)

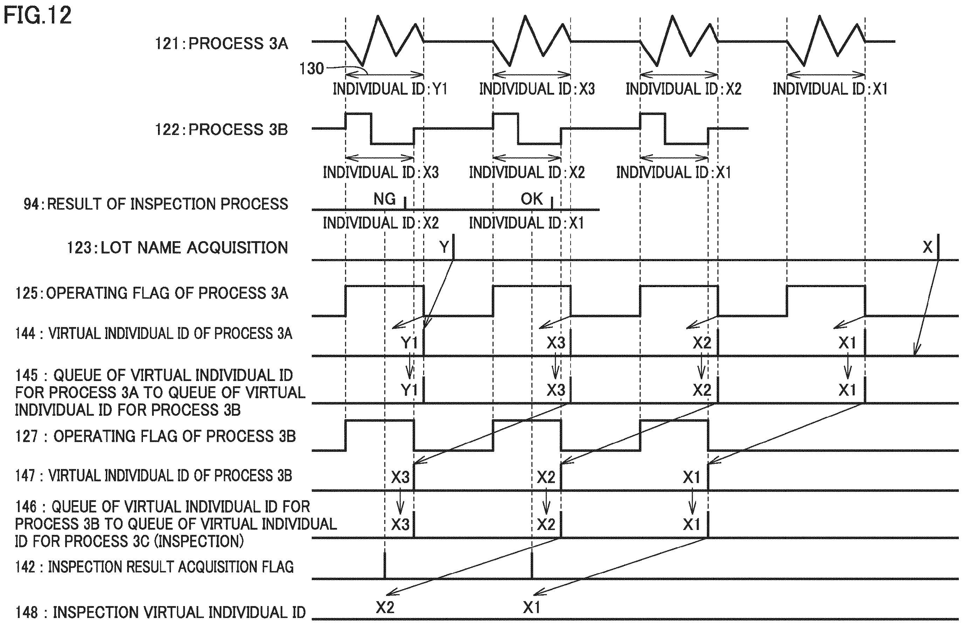

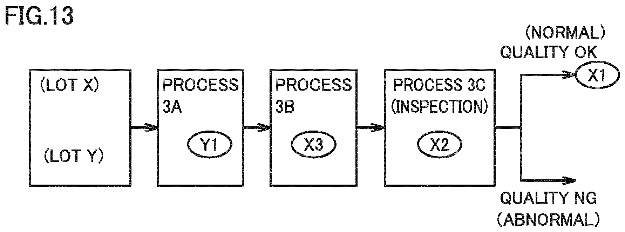

The case where the virtual individual ID is acquired as the product ID will be described. Fig. 12 is a view illustrating another example of the timing chart of the embodiment. Fig. 13 is a view schematically illustrating the process constituting the production line of the embodiment. Fig. 13 illustrates the case where the product of a different lot "Y" is input to production line 3 during the production of the product of one lot "X". In Fig. 13, the product having product ID "X1" passing through process 3C that is the inspection process is determined to be "quality OK", namely, normal. In addition, the product having product ID "X2" passing through process 3B flows to next process 3C, the product having product ID "X3" passing through process 3A flows to process 3B, and the product having product ID "Y1" of lot Y is input to process 3A. Fig. 12 illustrates the timing chart in the state of the process in Fig. 13.

In Fig. 12, for each lot, when the product of the lot is input to process 3A, lot name acquisition 123 is performed and lot name 45 is set. After the input of the lot is started to the production line to acquire lot name 45, count value 46 is set to lot data 44 every time the operating flag of the lot changes to "ON", and the virtual individual ID is indicated by a combination of lot name 45 and count value 46 of lot data 44. CPU 102 stores the virtual individual ID acquired in a certain process in, for example, a queue configured in data area 42. When the operating flag of the next process changes from "OFF" to "ON", CPU 102 reads the virtual individual ID from the queue, and performs the linking processing for linking the read virtual individual ID with the partial time series data acquired in subsequent period 130. In Fig. 12, a virtual individual ID 144 in the previous process (process 3A) is stored in a queue 145, and when operating flag 127 of next process 3B changes to "ON", virtual individual ID 144 read from queue 145 is utilized as a virtual individual ID 147 of next process 3B. Similarly, virtual individual ID 147 in the previous process (process 3B) is stored in queue 146, and the virtual individual ID 144 read from a queue 146 is utilized as a virtual individual ID 148 in next process 3C. As described above, when production line 3 is configured to produce the products in lot units, at least a part of the virtual individual ID can be configured to include the lot name that is the identifier common among the plurality of processes.

In the embodiment, operating flag 125,127 are set by the execution of the command such as a function block included in control program 140. Such the instruction may include an arithmetic command or a timer command that set the operating flag.

As described above, the method for acquiring the virtual individual ID in each process is not limited to the method for utilizing lot data 44 unique to each process as illustrated in Fig. 1, but may be a method for sharing the virtual individual ID stored in queue 145 between processes as illustrated in Fig. 12.

### <J. Example of information setting screen>

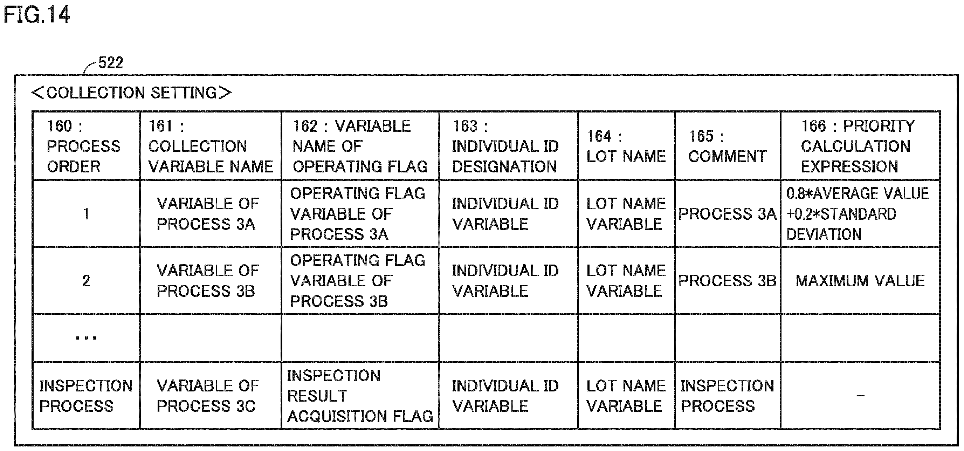

Fig. 14 is a view illustrating an example of an information setting screen of the embodiment. In Fig. 14, for example, UI 502 displays the screen on display 522, accepts the user operation on the screen, and acquires collection setting information 28 according to the accepted user operation.

Fig. 14 illustrates the screen on which collection setting information 28 is set in a table format. The items set in the table include, for each process, process order 160 indicating the order of the process in which the product flows through production line 3, a variable name 161 indicating the data item to be collected in the process, a variable name 162 in which the operating flag corresponding to the process is set, an individual ID designation 163, a lot name 164, a comment 165, and a priority calculation expression 166. In process order 160, the inspection process (process 3C) is set as the final process of production line 3. Individual ID designation 163 designates use of individual ID 43 as the product ID. Lot name 164 indicates a variable name in which lot name 45 is set. Comment 165 indicates a user comment such as description of data collected for the process.

Priority calculation expression 166 indicates an arithmetic expression utilized by priority processing program 284 in order to calculate the deviation degree that determines the priority order of graph display on the screen between processes.

Process order 160 is utilized to exchange the virtual individual ID between processes through the queue. Comment 165 may be displayed with the graph of the partial time series data in Fig. 7. One or a plurality of variable names can be set as collection variable name 161. Such the variable name includes a variable name of observation value 92 or a variable name of control command 93. For example, the variable name of observation value 92 can include three types of variable names of the torque, the speed, and the Z-axis position that are included in observation value 92 of field device 90 for screw tightening. Based on collection setting information 28 in which the three types of variable names are set as described above, data collection unit 63 can simultaneously collect the data of three types of the data items from the screw tightening process. In addition, control command 93 indicated by the variable name of the collection target may include a command to field device 90 such as a screw-tightening servomotor, for example, a command indicating a numerical value such as the position, the speed, the acceleration, a jerk, an angle, angular acceleration, an angular jerk, or the like as the command. The variable name of inspection result 94 is set to the collection variable name 161 of the inspection process.

Linking unit 64 links individual ID 43 with the partial time series data when individual ID designation 163 is set, and acquires the virtual individual ID to link the virtual individual ID with the partial time series data when individual ID designation 163 is not set. In step S1 of Fig. 6, the determination is performed based on individual ID designation 163 of collection setting information 28.

For each process, a rate of change in statistic 79 is calculated according to a reference expression of "deviation degree of statistic" = "statistic at abnormal time" / "statistic at normal time" utilizing statistic 79 of the process. When the user sets "maximum value" as priority calculation expression 166, a calculation formula of "deviation degree of statistic" = "maximum value at abnormal time" / "maximum value at normal time" is set. The value is not limited to the maximum value of statistic 79, but may be the minimum value, the average value, the standard deviation, or the like, or may be a combination of at least two of the minimum value, the average value, the standard deviation, or the like. In addition, the deviation degree of the statistic may be calculated using a value obtained by weighting the deviation degree of the statistic calculated by the reference expression. For example, the deviation degree of the statistic may be calculated by "deviation degree of statistic" = 0.8 × "deviation degree of average value" + 0.2 × "deviation degree of standard deviation". In this way, the deviation degree of statistic 79 is calculated for each process, and the graph of the partial time series data of the process having the large deviation degree is preferentially displayed on the screen as compared with the graph of the partial time series data of other processes. The screen displayed in this manner can provide the user with support information specifying the process having the large deviation degree among the plurality of processes of production line 3, namely, the process inducing "abnormality" of inspection result 94.

### <K. Utilization form of information based on visualization data>

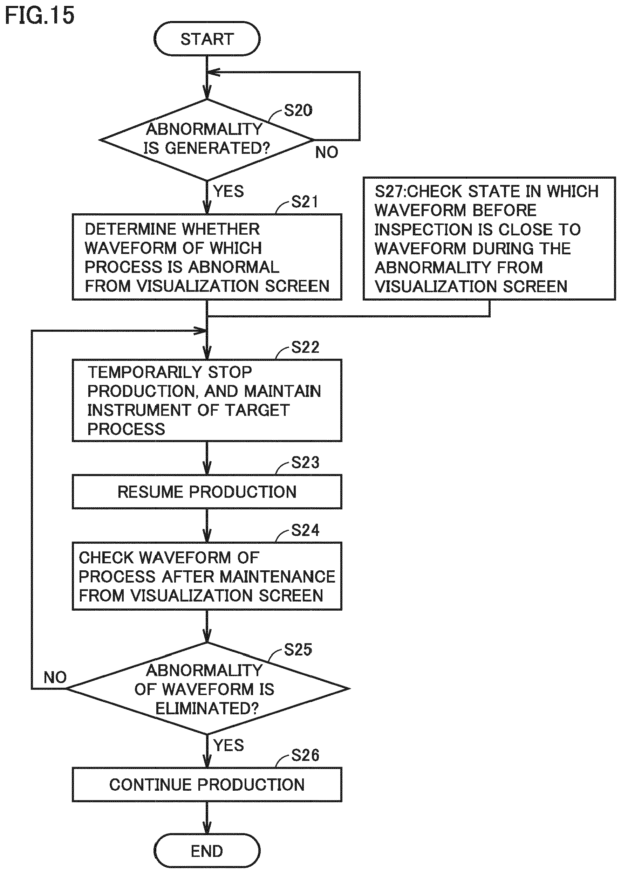

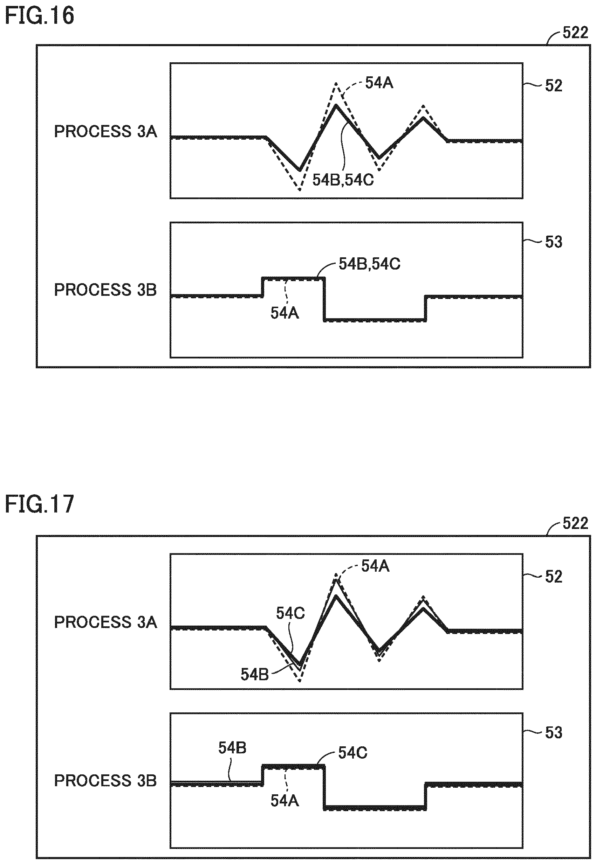

Fig. 15 is a flowchart illustrating a utilization mode of information based on visualization data of the embodiment. Fig. 16 to Fig. 19 are views illustrating display examples of the screen of the embodiment.

With reference to Fig. 15, for example, a scene in which the user who is a process manager or a quality manager utilizes information provided by the screen based on visualization data 283 will be described. The user determines whether the quality abnormality of the product is detected based on inspection result 94 from the inspection process (step S20). When it is determined that no quality abnormality is detected (NO in step S20), the user will repeat the determination in step S20.

When it is determined that the quality abnormality is detected (YES in step S20), the user determines which process the graph of the waveform of the partial time series data indicates the abnormality from the screen based on visualization data 283 displayed on display 522 (step S21). On this screen, as described above, the graph of the process having the large deviation degree is displayed in a higher order than the graphs of other processes. For example, in the screen of Fig. 16, the graph of process 3A is displayed at the top. The user can estimate that process 3A is the process that induces "abnormality" of the quality from the screen in Fig. 16.

The user temporarily stops production line 3 to maintains field device 90 of specified target process 3A (step S22). For example, when variable A is the data item of the collection target in process 3A, the user can narrow down field device 90 in which the value of variable A is observed to the maintenance target.

Thereafter, the user operates temporarily-stopped production line 3 to restart the production (step S23). On the screen of visualization data 283 based on the data collected after the restart of production, the graph of the waveform of the partial time series data of each process after maintenance is displayed.

The user checks the waveform based on the partial time series data of each process from the screen based on visualization data 283 generated after the production is resumed (step S24). The user checks whether the abnormality in the waveform graph is eliminated from the screen (step S25). That is, it is confirmed that there is no process including the graph with the large rate of change (deviation degree). When it is confirmed that the abnormality is not eliminated (NO in step S25), the process returns to step S22, and the user performs maintenance of field device 90.

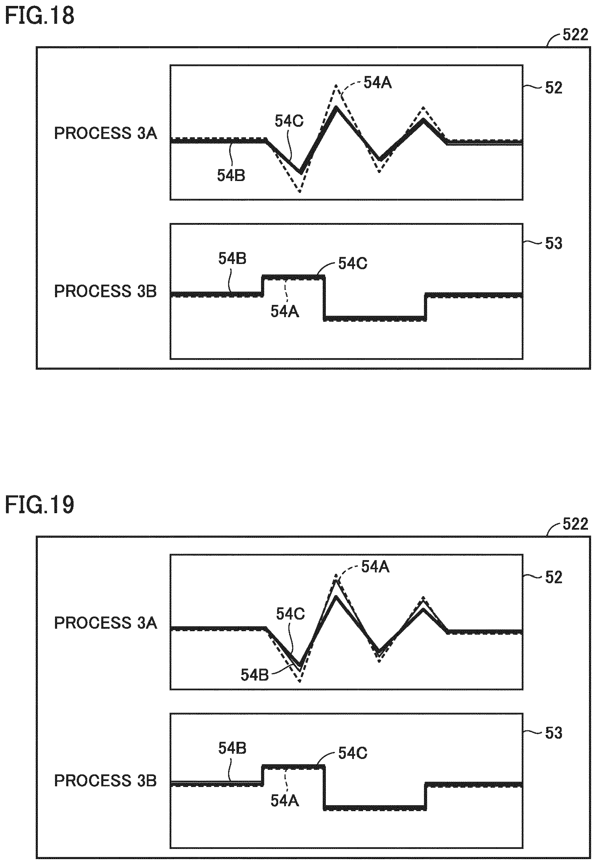

For example, when the screen in Fig. 19 is displayed in step S24, in the screen of Fig. 19, the waveform of original uninspected gray graph 54B (Fig. 16) in process 3A is changed to approximate the waveform of abnormal red graph 54A. From the screen presenting such the change in waveform, the user checks that the maintenance of field device 90 in process 3A is performed, but the cause of the quality abnormality is not fixed.

On the other hand, when it is confirmed that there is no process having the graph with the large deviation degree, namely, when it is confirmed that the abnormality is eliminated (YES in step S25), the production of the product is continued (step S26). For example, when the screen in Fig. 18 is displayed in step S24, the waveform of gray graph 54B of the original uninspected product is changed to approximate the waveform of normal blue graph 54C in the graph of process 3A in the screen of Fig. 18. From the screen representing such the change in the waveform, the user can check that the quality abnormality can be eliminated by maintaining field device 90 in process 3A.

In addition, the user monitors the screen based on visualization data 283 displayed on display 522 while production line 3 is in operation. For example, the screen in Fig. 17 is displayed. From the screen in Fig. 17, the user checks that the waveform of gray graph 54B of the uninspected product approximates the waveform of abnormal red graph 54A in the graph of process 3A (step S27). From such the screen information, the user can estimate that there is a high possibility that the product in which the quality abnormality is detected will be produced in the future due to the behavior of field device 90 in process 3A. Thereafter, the user proceeds to step S22 to perform maintenance.

### <L. Program and recording medium>

At least one processor executes the commands of IoT program 260 and web server program 280 of the embodiment, thereby causing the computer to implement the data collection method described above. IoT program 260 and web server program 280 can be provided as a program product by being recorded on a machine-readable recording medium such as the computer including the recording medium such as a flexible disk, a CD-ROM, a read only memory (ROM), a random access memory (RAM), and a hard disc drive (HDD) that are attached to PLC 100. Recording medium is a medium that accumulates information such as the program by electrical, magnetic, optical, mechanical, or chemical action such that a computer, other devices, a machine, or the like can read the information such as the recorded program. Such the recording medium may include a non-transitory machine-readable storage medium having stored thereon instructions that, when executed by one or more processors, cause the one or more processors to perform the data collection method.

The program(s) can also be provided to PLC 100 by being downloaded from network 2 through network controller 120.

### <M. Appendix>

The above embodiments include the following technical ideas.

### [Configuration 1]

A data collection device that collects data of a target produced through one or a plurality of processes provided in a production line (3), the data collection device comprising:
a collection unit (63) configured to collect data of a data item related to production work from each of the one or the plurality of processes (3A, 3B, 3C);
an acquisition unit (88, 89) configured to acquire an identifier of the target produced in the production line;
a linking unit (64) configured to link, for the each process, the identifier of the target and an inspection result (94) of the target with collection data (73) collected from the process by the collection unit in a period in which the production work is performed on the target in the process; and
a generation unit (65) configured to generate, for the each process, visualization data (283) visualizing the collected data of the process linked with the identifier and the inspection result using the linking unit.

### [Configuration 2]

The data collection device described in configuration 1, wherein
the collection unit periodically collects the data from the each process, and
the linking unit links, for the each process, the identifier of the target and the inspection result with partial time series data corresponding to the period in time series data configured by being periodically collected from the process.

### [Configuration 3]

The data collection device described in configuration 2, wherein the visualization data includes data that visualizes the partial time series data in which the identifier and the inspection result are linked with each other for the each process by arranging the partial time series data according to priority order based on a value of the partial time series data.

### [Configuration 4]

The data collection device described in configuration 3, wherein
the each process is configured to allow the target to be input one by one to the process,
the production line is configured to allow the target to be input from one process to a next process in predetermined order, and
the data collection device is configured to, for the each process, for each of a plurality of groups including the target input to the process, acquire a representative value of values of the partial time series data of each target constituting the group, and acquire a deviation degree between the representative value of each of the plurality of groups and the representative value of another group.

### [Configuration 5]

The data collection device described in configuration 4, wherein the generation unit determines the priority order based on the deviation degree acquired for the each process.

### [Configuration 6]

The data collection device described in configuration 4 or 5, wherein the representative value includes, for each of the plurality of groups, a statistic (79) of values of the partial time series data of each target constituting the group.

### [Configuration 7]

The data collection device described in configuration 6, wherein the visualization data includes data visualizing the statistic corresponding to the each group.

### [Configuration 8]

The data collection device described in any one of configurations 4 to 7, wherein the generation unit determines order in the priority order of the each process so as to be higher as the deviation degree of the process is larger.

### [Configuration 9]

The data collection device described in any one of configurations 4 to 8, wherein, for the each group, a type of the inspection result of the target constituting the group is different from a type of the inspection result of the target constituting the another groups.

### [Configuration 10]

The data collection device described in configuration 9, wherein the type of the inspection result includes normal, abnormal, and uninspected indicating that the target is not inspected yet.

### [Configuration 11]

The data collection device described in any one of configurations 2 to 10, wherein the visualization data includes, for the each process, characteristic visualization data (54A, 54B, 54C) visualizing a characteristic of a change in the value of the partial time series data for each target input to the process.

### [Configuration 12]

The data collection device described in configuration 11, wherein the characteristic visualization data includes, for the each process, temporal characteristic visualization data visualizing a characteristic indicating a temporal change in the value of the partial time series data for each target input to the process with a common time axis.

### [Configuration 13]

The data collection device described in any one of configurations 1 to 12, wherein the visualization data includes data visualizing the collection data in a mode according to the type of the inspection result linked with the collection data.

### [Configuration 14]

The data collection device described in any one of configurations 1 to 13, wherein the data collection device is included in a control device (100) that controls the production line.

### [Configuration 15]

A program including instructions, when executed by one or more processors, causes the one or more processors to perform a method, the method being a method for collecting data of a target produced through one or a plurality of processes provided in a production line (3), the method comprising:
collecting data of a data item related to production work from each of the one or the plurality of processes (3A, 3B, 3C);
acquiring an identifier of the target produced in the production line;
linking the identifier of the target and an inspection result of the target with collection data collected from the process in a period in which the production work is performed on the target in the each process; and
generating, for that each process, visualization data visualizing the collection data of the process linked with the identifier and the inspection result.

### [Configuration 16]

A method performed by a computer (102),
the method being a method for collecting data of a target produced through one or a plurality of processes (3A, 3B, 3C) provided in a production line, the method comprising:
collecting data of a data item related to production work from each of the one or the plurality of processes;
acquiring an identifier of the target produced in the production line;
linking the identifier of the target and an inspection result of the target with collection data collected from the process in a period in which the production work is performed on the target in the each process; and
generating, for the each process, visualization data visualizing the collection data of the process linked with the identifier and the inspection result.

Although the embodiment of the present invention has been described, it should be considered that the disclosed embodiment is an example in all respects and not restrictive. The scope of the present invention is indicated by the claims, and it is intended that all modifications within the meaning and scope of the claims are included in the present invention.

## Claims

1. A data collection device that collects data of a target produced through one or a plurality of processes provided in a production line (3), the data collection device comprising:
a collection unit (63) configured to collect data of a data item related to production work from each of the one or the plurality of processes (3A, 3B, 3C);
an acquisition unit (88, 89) configured to acquire an identifier of the target produced in the production line;
a linking unit (64) configured to link, for the each process, the identifier of the target and an inspection result (94) of the target with collection data (73) collected from the process by the collection unit in a period in which the production work is performed on the target in the process; and
a generation unit (65) configured to generate, for the each process, visualization data (283) visualizing the collected data of the process linked with the identifier and the inspection result using the linking unit.

2. The data collection device according to claim 1, wherein
the collection unit periodically collects the data from the each process, and
the linking unit links, for the each process, the identifier of the target and the inspection result with partial time series data corresponding to the period in time series data configured by being periodically collected from the process.

3. The data collection device according to claim 2, wherein the visualization data includes data that visualizes the partial time series data in which the identifier and the inspection result are linked with each other for the each process by arranging the partial time series data according to priority order based on a value of the partial time series data.

4. The data collection device according to claim 3, wherein
the each process is configured to allow the target to be input one by one to the process,
the production line is configured to allow the target to be input from one process to a next process in predetermined order, and
the data collection device is configured to, for the each process, for each of a plurality of groups including the target input to the process, acquire a representative value of values of the partial time series data of each target constituting the group, and acquire a deviation degree between the representative value of each of the plurality of groups and the representative value of another group is acquired.

5. The data collection device according to claim 4, wherein the generation unit determines the priority order based on the deviation degree acquired for the each process.

6. The data collection device according to claim 4 or 5, wherein the representative value includes, for each of the plurality of groups, a statistic (79) of values of the partial time series data of each target constituting the group.

7. The data collection device according to claim 6, wherein the visualization data includes data visualizing the statistic corresponding to the each group.

8. The data collection device according to claim 4 or 5, wherein the generation unit determines order in the priority order of the each process so as to be higher as the deviation degree of the process is larger.

9. The data collection device according to claim 4 or 5, wherein, for the each group, a type of the inspection result of the target constituting the group is different from a type of the inspection result of the target constituting the another groups.

10. The data collection device according to claim 9, wherein the type of the inspection result includes normal, abnormal, and uninspected indicating that the target is not inspected yet.

11. The data collection device according to any one of claims 2 to 5, wherein the visualization data includes, for the each process, characteristic visualization data (54A, 54B, 54C) visualizing a characteristic of a change in the value of the partial time series data for each target input to the process.

12. The data collection device according to claim 11, wherein the characteristic visualization data includes, for the each process, temporal characteristic visualization data visualizing a characteristic indicating a temporal change in the value of the partial time series data for each target input to the process with a common time axis.

13. The data collection device according to any one of claims 1 to 5, wherein the visualization data includes data visualizing the collection data in a mode according to the type of the inspection result linked with the collection data.

14. The data collection device according to any one of claims 1 to 5, wherein the data collection device is included in a control device (100) that controls the production line.

15. A program including a instructions, when executed by one or more processors, causes the one or more processors to perform a method, when at least one processor is executed to perform a method,
the method being a method for collecting data of a target produced through one or a plurality of processes provided in a production line (3), the method comprising:
collecting data of a data item related to production work from each of the one or the plurality of processes (3A, 3B, 3C);
acquiring an identifier of the target produced in the production line;
linking the identifier of the target and an inspection result of the target with collection data collected from the process in a period in which the production work is performed on the target in the each process; and
generating, for that each process, visualization data visualizing the collection data of the process linked with the identifier and the inspection result.
